# FASCICULE DE BREVET EUROPEEN

(11) **EP 2 112 418 B1**
(45) Date de publication et mention de la délivrance du brevet: **26.10.2011**
(21) Numéro de dépôt: 09290287.3
(22) Date de dépôt: 17.04.2009
(51) Int. Cl.: F16L 47/24

(54) **Dispositif de raccordement**
Anschlussvorrichtung
Connection device

(30) Priorité: 21.04.2008 FR 0802207
(43) Date de publication de la demande: 28.10.2009
(73) Titulaire: Hutchinson, 75008 Paris (FR)
(72) Inventeur: Mamie, Magalie, 77300 Fontainebleau (FR); Voltz, William, 45120 Corquilleroy (FR); Auclair, Alexandre, 45210 Ferrières en Gâtinais (FR); Bernard, Christophe, 45700 Villemandeur (FR)
(74) Mandataire: Bolinches, Michel Jean-Marie

(56) Documents cités:
- EP-A- 0 493 316
- EP-A- 0 537 377
- EP-A- 0 692 667
- EP-A- 1 087 167
- DE-U1- 9 310 685
- DE-U1- 29 622 122
- US-A1- 2006 152 003

## Description

La présente invention concerne un dispositif de raccordement pour un circuit véhiculant un fluide sous pression, en particulier un circuit de climatisation ou de direction assistée pour véhicule automobile, un tel circuit et un procédé d'assemblage de ce dispositif de raccordement.

D'une manière générale, il est connu dans les circuits de climatisation pour véhicules automobile de relier les tubes métalliques (typiquement en aluminium) à des organes de ces circuits via des raccords métalliques, par exemple également en aluminium ou en acier inoxydable.

On a récemment choisi de remplacer certains de ces raccords métalliques par des raccords en matière plastique assemblés sur les tubes métalliques correspondants, comme par exemple décrit dans le document WO-A1-97/47908. Ce document divulgue un dispositif de raccord rapide en particulier pour circuit de climatisation comportant un raccord métallique ou en matière plastique, qui est monté autour d'une zone de raccordement d'un tube métallique présentant un renflement circonférentiel à proximité immédiate duquel un joint d'étanchéité annulaire est surmoulé sur la face interne de ce raccord.

Un dispositif de raccordement de ce type est aussi connu du document EP 0 493 316.

Le dispositif de raccord selon ce document présente une étanchéité et une tenue mécanique relativement satisfaisantes en fonctionnement.

Un but de la présente invention est de proposer un dispositif de raccordement pour un circuit véhiculant un fluide sous pression, en particulier un circuit de climatisation ou de direction assistée pour véhicule automobile, ce dispositif comportant un raccord tubulaire polymérique qui est monté autour d'une zone de raccordement radialement externe d'un tube métallique et qui est destiné à être connecté à un organe du circuit, cette zone présentant un renflement circonférentiel contre lequel est monté un joint d'étanchéité, dispositif qui présente notamment une étanchéité et une tenue mécaniques encore améliorées en comparaison de celles procurées par le raccord selon le document précité.

A cet effet, un dispositif selon l'invention est tel que ce raccord comprend une bague qui comporte une première extrémité axiale de raccordement au tube enserrant ce renflement via un surmoulage du tube par cette bague, et dont une seconde extrémité axiale est soudée à un embout tubulaire également compris dans ce raccord, la face radialement interne de cet embout longeant l'extrémité libre adjacente du tube, de sorte que l'interface de soudage soit intégrée au raccord.

On notera que l'utilisation de ce raccord entièrement polymérique permet d'éviter les problèmes de fissuration des raccords métalliques usuellement façonnés par formage, et également d'inclure éventuellement selon les besoins d'autres fonctionnalités dans le raccord (e.g. un capteur de pression).

Avantageusement, ce raccord est soudé par friction circulaire (i.e. par rotation) sur ladite bague. La Demanderesse a en effet vérifié que ce mode de soudage permet d'obtenir une soudure plus résistante du raccord sur le tube que les autres types de soudages communément employés, telles que le soudage par vibrations, par ultrasons ou « miroir ».

Selon une autre caractéristique de l'invention, une face radiale d'extrémité dudit embout peut présenter au moins un renfoncement annulaire ou encoche, dans lequel est insérée ladite seconde extrémité de la bague et qui reçoit la matière fondue de ladite interface de soudage, via un cordon de soudure circulaire obtenu par ce soudage par friction circulaire.

On notera que ce soudage par friction circulaire permet d'éviter les bavures de soudage pouvant nuire au fonctionnement du dispositif de raccordement ou à son esthétique.

Avantageusement, la bague peut présenter en demi-section axiale sensiblement une forme de « L », dont la base radiale adhère par surmoulage à un côté dudit renflement opposé à celui pourvu dudit joint et dont la paroi axiale présente de préférence une épaisseur inférieure à celle dudit embout et qui se termine par ladite seconde extrémité, laquelle présente un profil adapté pour venir s'encastrer dans ledit ou chaque renfoncement de l'embout.

Egalement avantageusement, le renflement du tube peut présenter des méplats lui conférant une forme de collerette de section sensiblement rectangulaire, de sorte à optimiser le blocage en rotation de la bague sur le tube, lors du soudage par friction circulaire précité.

Selon une autre caractéristique de l'invention, la face radialement interne dudit embout peut longer la face radialement externe de ladite extrémité libre du tube, avec un jeu entre ces deux faces par exemple de l'ordre de 0,1 mm (du fait des tolérances de fabrication pour le formage et l'usinage).

Avantageusement, la bague et l'embout sont à base de matières plastiques ayant des points de fusion proches l'un de l'autre, étant de préférence tous deux à base d'un même polymère thermoplastique qui présente en particulier :
- à l'état sec venu de moulage (« dry as molded » ou « DAM ») une contrainte et une élongation à la rupture, mesurées avec un déplacement de 5 mm/min. selon la norme ISO 527-1/-2, respectivement supérieures à 180 MPa et à 2 %, et
- à un taux d'humidité relative de 50 %, une contrainte et une élongation à la rupture, également mesurées avec ce déplacement et selon la même norme ISO 527-1/-2, respectivement supérieures à 130 MPa et à 3 %.

Encore plus préférentiellement, le raccord est à base d'un polyamide 6.6 chargé par des fibres de verre, et le tube est à base d'aluminium.

Un circuit de climatisation ou de direction assistée pour véhicule automobile selon l'invention, en particulier un circuit de climatisation véhiculant du R134a sous haute pression à titre de gaz frigorigène, est tel qu'il comporte au moins un dispositif de raccordement tel que défini précédemment.

Un procédé d'assemblage selon l'invention du dispositif de raccordement étanche présenté ci-dessus comprend :
a) le surmoulage du tube par ladite bague, pour que ladite première extrémité de la bague adhère au tube en enserrant ledit renflement,
b) le montage dudit joint d'étanchéité contre ce renflement, entre ce dernier et la bague, puis
c) le soudage dudit embout sur ladite seconde extrémité de la bague, de préférence par l'intermédiaire d'une face radiale d'extrémité de cet embout dans laquelle est ménagé au moins un renfoncement annulaire conçu pour recevoir cette seconde extrémité de la bague.

Avantageusement, l'on met en oeuvre l'étape c) via un soudage par friction circulaire, comprenant une rotation relative de l'embout sur la bague sous une pression axiale de soudure de préférence voisine de 1,5 bars puis, lors d'un refroidissement faisant suite à cette rotation, l'exercice d'une pression axiale de maintien de préférence voisine de 2 bars.

Egalement avantageusement, l'on réalise ce soudage par friction circulaire à une vitesse de rotation voisine de 4000 tours/min. et pendant une durée d'environ dix secondes, pour un enfoncement axial de l'embout dans la bague d'environ 3 mm, de préférence.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec le dessin joint, dans lequel :
la figure 1 est une vue schématique partielle en section axiale d'une partie d'un dispositif de raccordement selon l'invention dans une première phase de son procédé ce fabrication, montrant le surmoulage du tube métallique par la bague polymérique,
la figure 2 est une vue schématique partielle éclatée en section axiale d'un dispositif de raccordement selon l'invention montrant le tube pourvu de la bague selon la figure 1, en regard de laquelle est disposé l'embout également polymérique à souder sur cette bague, et
la figure 3 est une vue schématique partielle assemblée en section axiale du dispositif de raccordement de la figure 2, après ce soudage de l'embout sur la bague.

Le dispositif de raccordement 1 selon l'invention illustré dans l'exemple de réalisation de ces figures comporte essentiellement :
- un tube métallique 10 (e.g. en aluminium) présentant une zone de raccordement 11 radialement externe qui est délimitée axialement par un renflement circonférentiel 12 contre lequel est monté un joint d'étanchéité torique 13 et par l'extrémité libre 14 adjacente du tube 10, et
- un raccord tubulaire 20 polymérique de préférence en matériau thermoplastique qui est monté autour de la zone de raccordement 11 du tube 10 et qui est destiné à être connecté à un organe du circuit correspondant (non illustré, seule l'extrémité de connexion du raccord 20 avec le tube 10 étant visible sur ces figures).

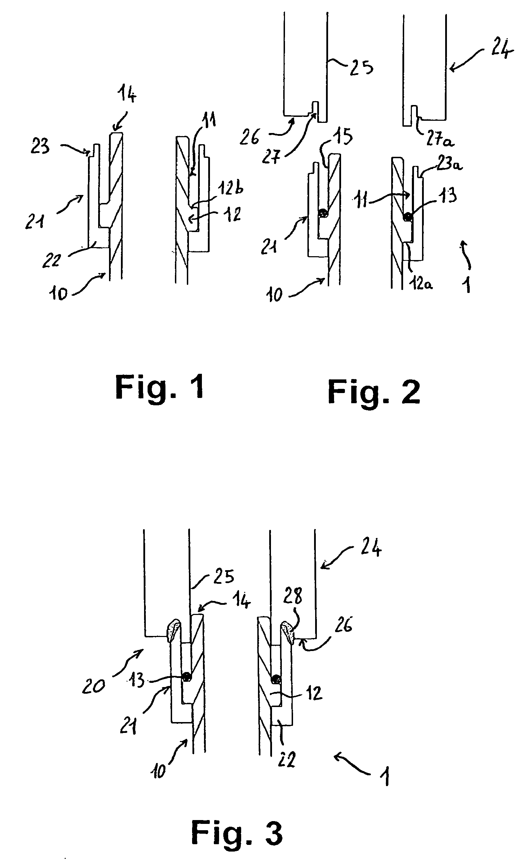

Le raccord 20 de l'invention comprend une bague 21 qui comporte une première extrémité axiale de raccordement 22 au tube 10 enserrant ce renflement 12 via un surmoulage du tube 10 par cette bague 21 (voir figure 1), et dont une seconde extrémité axiale 23 est soudée par friction circulaire à un embout tubulaire 24 également compris dans ce raccord 20, de telle manière que la face radialement interne 25 de cet embout 24 longe au jeu de fabrication près (0,1 mm par exemple) la face radialement externe 15 de l'extrémité libre 14 du tube 10 (voir figures 2 et 3).

Comme visible aux figures 2 et 3, la face radiale d'extrémité 26 adjacente de l'embout 24 présente un renfoncement 27 qui est en forme d'encoche annulaire par exemple munie d'un épaulement 27a sur la face radialement externe de cette encoche (la face radialement interne de ce renfoncement 27 étant plane dans la direction axiale dans cet exemple de réalisation), renfoncement 27 dans lequel est insérée la seconde extrémité 23 de la bague 21 qui présente un profil adapté muni par exemple d'un épaulement 23a complémentaire de celui du renfoncement 27 pour venir s'encastrer dans ce dernier.

Plus précisément, la bague 21 présente en demi-section axiale une forme de « L », dont la base radiale adhère par surmoulage à un côté 12a du renflement 12 opposé au côté 12b pourvu du joint 13 et dont la paroi axiale présente une épaisseur très inférieure à celle de l'embout 24.

Du fait du soudage par friction circulaire qui est utilisé pour solidariser de manière étanche l'extrémité 26 de l'embout 24 à celle de la bague 21, on intègre avantageusement la matière fondue 28 du cordon de soudure au raccord 20, en évitant ainsi les bavures pouvant entraver le fonctionnement ou bien nuire à l'esthétique du raccordement.

De préférence, le renflement 12 est formé d'une collerette de section sensiblement rectangulaire à méplats, de sorte à optimiser le blocage en rotation de la bague 21 surmoulée sur le tube 10, lors de l'opération de rotation relative de l'embout 24 et de la bague 21 inhérente au soudage par friction circulaire.

Le matériau thermoplastique utilisé pour tant pour la bague 21 que pour l'embout 24 selon l'invention est de préférence un polyamide 6.6 chargé à 35 % de fibres de verre, qui présente avantageusement les propriétés mécaniques suivantes :
- à l'état sec venu de moulage (« dry as molded » ou « DAM »), une contrainte et une élongation à la rupture, mesurées avec un déplacement de 5 mm/min. selon la norme ISO 527-1/-2, respectivement de 195 MPa et 2,5 %, et
- à un taux d'humidité relative de 50 %, une contrainte et une élongation à la rupture, également mesurées avec ce même déplacement et selon cette même norme ISO 527-1/-2, respectivement de 140 MPa et 4 %.

Quant au joint d'étanchéité 13, il est prévu étanche au fluide circulant dans ce dispositif 1 et compatible avec ce fluide (e.g. un gaz frigorigène tel que le R134a, dans le cas préférentiel d'un circuit de climatisation pour véhicule automobile) et qui est par exemple à base de caoutchouc nitrile hydrogéné (HNBR) ou d'un terpolymère éthylène-propylène-diène (EPDM).

Le soudage par friction circulaire de l'embout 24 sur la bague 21 est par exemple mis en oeuvre de la manière suivante, en référence à des essais de soudage réalisés avec les matériaux préférentiels précités.

On a utilisé une machine de dénomination commerciale « MECASONIC » et de modèle « MCRI », à une vitesse de rotation de 4000 tours/min. et pendant une durée d'environ dix secondes. Chaque opération de soudage comprend une rotation de l'embout 24 sur la bague 21 sous une pression axiale de soudure de 1,5 bars puis, lors d'un refroidissement faisant suite à cette rotation, l'exercice d'une pression axiale de maintien de 2 bars. Pour chaque soudage réalisé, on a réalisé un enfoncement programmé de l'embout 24 dans la bague 21 de Δx = 3 mm dans la direction axiale, l'obtention de ce degré d'enfoncement Δx déterminant l'arrêt de la rotation de la machine.

On a réalisé un test de contrôle de l'étanchéité obtenue pour ce dispositif de raccordement 1, en utilisant de l'hélium à titre de fluide parcourant la canalisation incluant ce dispositif, lequel a été testé initialement puis après un vieillissement thermique de 2 heures à 100° C. La pression interne de cette canalisation était de 25 bars, et la température du fluide et de la pièce était de 20° C. On a maintenu la canalisation en pression pendant 5 minutes, avant de mesurer les débits de fuite à l'aide d'un détecteur d'hélium de dénomination commerciale « INFICON » et de modèle « Ecotec E3000 ».

On a obtenu pour ce dispositif 1 des débits de fuite d'hélium inférieurs ou égaux à 10⁻⁶ mbar.l/s, ce qui témoigne d'une étanchéité très satisfaisante qui est notablement améliorée par rapport à celle des dispositifs de raccordement connus à raccords métalliques.

On a également réalisé un test de tenue en pression du dispositif de raccordement 1 en utilisant une canalisation montée sur un banc d'essai et dans laquelle on fait circuler une huile. L'enceinte et l'huile étaient à 100° C, le gradient de pression était de 0,1MPa/s, et l'on a maintenu cette canalisation en pression à une pression de non-éclatement de 100 bars pendant 5 minutes, avant de relever la pression d'éclatement maximale.

On a obtenu pour ce dispositif de raccordement 1 des pressions maximales d'éclatement de 180 bars, ce qui témoigne d'une tenue à la pression de fluide très satisfaisante de ce dispositif selon l'invention.

On a en outre réalisé un test de tenue du raccordement à l'arrachement à la température ambiante de 20° C, en utilisant une machine de traction/ compression équipée d'un dynamomètre, à une vitesse de 50 mm/min. On a placé le raccord plastique 20 dans le mors fixe de cette machine, et le tube métallique 10 dans son mors mobile. On a ainsi mesuré la résistance à l'arrachement du raccord 20 vis-à-vis du tube 10, en arrêtant chaque essai lors de la désolidarisation de ces deux éléments.

On a ainsi obtenu une résistance à l'arrachement du dispositif de raccordement 1 selon l'invention d'environ 675 daN, ce qui témoigne d'une liaison satisfaisante entre le raccord 20 et le tube 10.

On a enfin réalisé un test de tenue à la rotation du dispositif de raccordement 1 selon l'invention, en mesurant l'effort maximal radial entre le raccord plastique 20 et le tube métallique 10, au moyen d'une clé dynamométrique. On a ainsi mesuré un couple de rotation de 16 N.m, ce qui témoigne d'une tenue à la rotation satisfaisante.

## Revendications

1. Dispositif de raccordement (1) étanche pour un circuit véhiculant un fluide sous pression, en particulier un circuit de climatisation ou de direction assistée pour véhicule automobile, ce dispositif comportant un raccord tubulaire (20) polymérique qui est monté autour d'une zone de raccordement (11) radialement externe d'un tube métallique (10) inclus dans le dispositif et qui est destiné à être connecté à un organe du circuit, cette zone présentant un renflement circonférentiel (12) contre lequel est monté un joint d'étanchéité (13), également inclus dans le dispositif où le raccord comprend une bague (21) qui comporte une première extrémité axiale (22) de raccordement au tube enserrant ce renflement via un surmoulage du tube par cette bague, et dont une seconde extrémité axiale (23) est soudée à un embout tubulaire (24) également compris dans ce raccord, la face radialement interne (25) de cet embout longeant l'extrémité libre adjacente (14) du tube, de sorte que l'interface de soudage soit intégrée au raccord.

2. Dispositif de raccordement (1) selon la revendication 1, **caractérisé en ce que** ledit embout (24) est soudé par friction circulaire sur ladite bague (21).

3. Dispositif de raccordement (1) selon la revendication 2, **caractérisé en ce qu'**une face radiale d'extrémité (26) dudit embout (24) présente au moins un renfoncement annulaire (27), dans lequel est insérée ladite seconde extrémité (23) de la bague (21) et qui reçoit la matière fondue (28) de ladite interface de soudage.

4. Dispositif de raccordement (1) selon la revendication 3, **caractérisé en ce que** ladite bague (21) présente en demi-section axiale sensiblement une forme de « L », dont la base radiale (22) adhère par surmoulage à un côté (12a) dudit renflement (12) opposé à celui (12b) pourvu dudit joint (13) et dont la paroi axiale présente une épaisseur inférieure à celle dudit embout (24) et qui se termine par ladite seconde extrémité (23), laquelle présente un profil adapté pour venir s'encastrer dans ledit ou chaque renfoncement (27) de l'embout.

5. Dispositif de raccordement (1) selon les revendications 2 et 4, **caractérisé en ce que** ledit renflement (12) présente des méplats lui conférant une forme de collerette de section sensiblement rectangulaire, de sorte à optimiser le blocage en rotation de ladite bague (21) sur le tube (10), lors du soudage par friction circulaire.

6. Dispositif de raccordement (1) selon une des revendications précédentes, **caractérisé en ce que** la face radialement interne (25) dudit embout (24) longe la face radialement externe (15) de ladite extrémité libre (14) du tube (10), avec un jeu entre ces deux faces par exemple de l'ordre de 0,1 mm.

7. Dispositif de raccordement (1) selon une des revendications précédentes, **caractérisé en ce que** ladite bague (21) et ledit embout (24) sont à base de matières plastiques ayant des points de fusion proches l'un de l'autre, étant de préférence tous deux à base d'un même polymère thermoplastique qui présente :
- à l'état sec venu de moulage, une contrainte et une élongation à la rupture, mesurées avec un déplacement de 5 mm/min. selon la norme ISO 527-1/-2, respectivement supérieures à 180 MPa et à 2 %, et
- à un taux d'humidité relative de 50 %, une contrainte et une élongation à la rupture, également mesurées avec ce déplacement et selon cette norme ISO 527-1/-2, respectivement supérieures à 130 MPa et à 3 %.

8. Dispositif de raccordement (1) selon la revendication 7, **caractérisé en ce que** le raccord (20) est à base d'un polyamide 6.6 chargé par des fibres de verre, et **en ce que** le tube (10) est à base d'aluminium.

9. Circuit de climatisation ou de direction assistée pour véhicule automobile, en particulier un circuit de climatisation véhiculant du R134a sous haute pression à titre de gaz frigorigène, **caractérisé en ce qu'**il comporte au moins un dispositif de raccordement (1) selon une des revendications précédentes.

10. Procédé d'assemblage d'un dispositif de raccordement étanche (1) selon une des revendications 1 à 8, **caractérisé en ce qu'**il comprend :
a) le surmoulage du tube (10) par ladite bague (21), pour que ladite première extrémité (22) de la bague adhère au tube en enserrant ledit renflement (12),
b) le montage dudit joint d'étanchéité (13) contre ledit renflement, entre ce dernier et la bague, puis
c) le soudage dudit embout (24) sur ladite seconde extrémité (23) de la bague, de préférence par l'intermédiaire d'une face radiale d'extrémité (26) de cet embout dans laquelle est ménagé au moins un renfoncement annulaire (27) conçu pour recevoir cette seconde extrémité de la bague.

11. Procédé d'assemblage selon la revendication 10, **caractérisé en ce que** l'on met en oeuvre l'étape c) via un soudage par friction circulaire, comprenant une rotation relative de l'embout (24) sur la bague (21) sous une pression axiale de soudure de préférence voisine de 1,5 bars puis, lors d'un refroidissement faisant suite à cette rotation, l'exercice d'une pression axiale de maintien de préférence voisine de 2 bars.

12. Procédé d'assemblage selon la revendication 11, **caractérisé en ce que** l'on réalise ce soudage à une vitesse de rotation voisine de 4000 tours/min. et pendant une durée d'environ dix secondes, pour un enfoncement axial de l'embout (24) dans la bague (21) d'environ 3 mm, de préférence.

## Claims

1. Fluid-tight coupling device (1) for a circuit conveying a fluid under pressure, in particular an automobile vehicle air-conditioning or power-assisted steering circuit, this device including a tubular polymer coupling (20) that is mounted around a radially external coupling area (11) of a metal tube (10) that is part of the device and is intended to be connected to a unit of the circuit, this area including a circumferential enlargement (12) against which is mounted a seal (13) that is also part of the coupling device, wherein the coupling includes a ring (21) which has a first axial end (22) for connection to the tube that grips this enlargement by virtue of the ring being overmoulded onto the tube, and a second axial end (23) of which is welded to a tubular sleeve (24) that is also part of the coupling device, the radially internal face (25) of this sleeve extending along the adjacent free end (14) of the tube so that the welding interface is integrated into the coupling device.

2. Coupling device (1) according to claim 1, **characterised in that** said sleeve (24) is welded to said ring (21) by circular friction welding.

3. Coupling device (1) according to claim 2, **characterised in that** a radial end face (26) of said sleeve (24) includes at least one annular recess (27) into which said second end (23) of the ring (21) is inserted and which receives the molten material (28) of said welding interface.

4. Coupling device (1) according to claim 3, **characterised in that** said ring (21) has a substantially L-shaped axial half-section, the radial base (22) of which adheres to, by virtue of being moulded over, one side (12a) of said enlargement (12) opposite that (12b) provided with said seal (13) and the axial wall of which is thinner than said sleeve (24) and terminates at said second end (23), which has a profile adapted to be received in abutment in said recess (27) or each recess (27) of the sleeve.

5. Coupling device (1) according to claims 2 and 4, **characterised in that** said enlargement (12) includes flats conferring on it a flange shape of substantially rectangular section so as to optimise immobilization of said ring (21) against rotation on the tube (10) during circular friction welding.

6. Coupling device (1) according to any one of the preceding claims, **characterised in that** the radially internal face (25) of said sleeve (24) extends along the radially external face (15) of said free end (14) of the tube (10) with a clearance between these two faces of the order of 0.1 mm, for example.

7. Coupling device (1) according to any one of the preceding claims, **characterised in that** said ring (21) and said sleeve (24) are based on plastic materials having similar melting points, both preferably based on the same thermoplastic polymer, which has:
- in the dry state after moulding, a fracture stress and strain measured with a displacement of 5 mm/min in accordance with the ISO 527-1/-2 standard greater than 180 MPa and 2%, respectively, and
- with a relative humidity of 50%, a fracture stress and strain also measured with this displacement and in accordance with this ISO 527-1/-2 standard greater than 130 MPa and 3%, respectively.

8. Coupling device (1) according to claim 7, **characterised in that** the coupling (20) is based on a 6.6 polyamide charged with glass fibres and **in that** the tube (10) is based on aluminium.

9. Air-conditioning or power-assisted steering circuit for automobile vehicles, in particular an air-conditioning circuit conveying R134a refrigerant gas at high pressure, **characterised in that** it includes at least one coupling device (1) according to any one of the preceding claims.

10. Method of assembling a fluid-tight coupling device (1) according to any one of claims 1 to 8, **characterised in that** it includes:
a) overmoulding said ring (21) onto the tube (10) so that said first end (22) of the ring adheres to the tube by gripping said enlargement (12),
b) mounting said seal (13) against said enlargement, between it and the ring, and then
c) welding said sleeve (24) to said second end (23) of the ring, preferably by way of a radial end face (26) of this sleeve in which there is provided at least one annular recess (27) designed to receive this second end of the ring.

11. Assembly method according to claim 10, **characterised in that** the step c) is effected by circular friction welding, involving relative rotation of the sleeve (24) on the ring (21) with an axial welding pressure preferably in the vicinity of 1.5 bar and then, during cooling after this rotation, application of an axial retaining pressure preferably close 2 bar.

12. Assembly method according to claim 11, **characterised in that** welding is effected at a rotation speed in the vicinity of 4000 rpm and for approximately ten seconds for an axial movement of the sleeve (24) into the ring (21) that is preferably approximately 3 mm.

## Patentansprüche

1. Dichte Anschlussvorrichtung (1) für einen ein unter Druck stehendes Fluid führenden Kreislauf, insbesondere einen Klimatisierungs- oder Servolenkungskreislauf für Kraftfahrzeug, wobei diese Vorrichtung einen polymeren rohrförmigen Anschluss (20) aufweist, der um einen radial äußeren Anschlussbereich (11) eines in der Vorrichtung enthaltenen Metallrohrs (10) angebracht ist und dazu dient, mit einem Organ des Kreislaufs verbunden zu werden, wobei dieser Bereich einen Umfangswulst (12) aufweist, gegen welchen eine gleichfalls in der Vorrichtung enthaltene Dichtung (13) angebracht ist, bei der der Anschluss einen Ring (21) umfasst, der ein erstes axiales Ende (22) für den Anschluss mit dem Rohr aufweist, das diesen Wulst über eine Überformung des Rohrs durch diesen Ring umklammert, und von dem ein zweites axiales Ende (23) mit einem gleichfalls in diesem Anschluss enthaltenen Rohrstutzen (24) verschweißt ist, wobei die radial innere Fläche (25) dieses Stutzens entlang dem angrenzenden freien Ende (14) des Rohrs verläuft, so dass die Schweißtrennfläche im Anschluss integriert ist.

2. Anschlussvorrichtung (1) nach Anspruch 1, **dadurch gekennzeichnet, dass** der Stutzen (24) durch kreisförmige Reibung am Ring (21) verschweißt ist.

3. Anschlussvorrichtung (1) nach Anspruch 2, **dadurch gekennzeichnet, dass** eine radiale Endfläche (26) des Stutzens (24) mindestens eine ringförmige Einbuchtung (27) aufweist, in welcher das zweite Ende (23) des Rings (21) eingesetzt ist und die das geschmolzenes Material (28) der Schweißtrennfläche aufnimmt.

4. Anschlussvorrichtung (1) nach Anspruch 3, **dadurch gekennzeichnet, dass** der Ring (21) einen im Wesentlichen "L"-förmigen axialen Halbquerschnitt aufweist, dessen radiale Basis (22) durch Überformung an einer Seite (12a) des Wulstes (12) anhaftet, die der Seite (12b) entgegengesetzt ist, die mit der Dichtung (13) versehen ist, und dessen axiale Wand eine geringere Dicke als die des Stutzens (24) aufweist, und der mit dem zweiten Ende (23) endet, das ein geeignetes Profil aufweist, um in die oder jede Einbuchtung (27) des Stutzens zu passen.

5. Anschlussvorrichtung (1) nach den Ansprüchen 2 und 4, **dadurch gekennzeichnet, dass** der Wulst (12) Abflachungen aufweist, die ihm eine Kragenform mit einem im Wesentlichen rechteckigen Querschnitt verleihen, so dass die Drehblockierung des Rings (21) auf dem Rohr (10) beim Schweißen durch kreisförmige Reibung optimiert wird.

6. Anschlussvorrichtung (1) nach einem der vorhergehenden Ansprüche, **dadurch gekennzeichnet, dass** die radial innere Fläche (25) des Stutzens (24) entlang der radial äußeren Fläche (15) des freien Endes (14) des Rohrs (10) mit einem Spiel zwischen diesen beiden Flächen beispielsweise in der Größenordnung von 0,1 mm verläuft.

7. Anschlussvorrichtung (1) nach einem der vorhergehenden Ansprüche, **dadurch gekennzeichnet, dass** der Ring (21) und der Stutzen (24) aus Kunstoffen hergestellt sind, die einander nahe Schmelzpunkten haben, wobei beide vorzugsweise aus demselben thermoplastischen Polymers bestehen, das
- im trockenen Zustand nach dem Gießen eine Bruchspannung und -dehnung aufweist, die mit einer Verschiebung von 5 mm/min nach der ISO-Norm 527-1/-2 gemessen wird bzw. über 180 MPa bzw. 2% beträgt, und
- - bei einem relativen Feuchtigkeitsgehalt von 50% eine Bruchspannung und -dehnung aufweist, die auch mit der gleichen Verschiebung nach dieser ISO-Norm 527-1/-2 gemessen wird und über 130 MPa bzw. 3% beträgt.

8. Anschlussvorrichtung (1) nach Anspruch 7, **dadurch gekennzeichnet, dass** der Anschluss (20) aus einem Polyamid 6.6 mit Glasfaseranteil und das Rohr (10) aus Aluminium hergestellt ist.

9. Klimatisierungs- oder Servolenkungskreislauf für Kraftfahrzeug, insbesondere Klimatisierungskreislauf, der unter Druck stehendes R134a als Kältemittelgas führt, **dadurch gekennzeichnet, dass** er mindestens eine Anschlussvorrichtung (1) nach einem der vorhergehenden Ansprüche aufweist.

10. Verfahren zur Montage einer dichten Anschlussvorrichtung (1) nach einem der Ansprüche 1 bis 8, **dadurch gekennzeichnet, dass** das es folgende Schritte aufweist:
a) Überformen des Rohrs (10) durch den Ring (21), damit das erste Ende (22) des Rings am Rohr anhaftet, indem der Wulst (12) umklammert wird,
b) Anbringen der Dichtung (13) gegen den Wulst zwischen Letzterem und dem Ring, anschließend
c) Schweißen des Stutzens (24) auf dem zweiten Ende (23) des Rings vorzugsweise über eine radiale Endfläche (26) dieses Stutzens, in welcher mindestens eine ringförmige Einbuchtung (27) eingebracht ist, die zur Aufnahme dieses zweiten Endes des Rings vorgesehen ist.

11. Montageverfahren nach Anspruch 10, **dadurch gekennzeichnet, dass** der Schritt c) über eine Schweißung durch kreisförmige Reibung durchgeführt wird, wobei eine relative Rotation des Stutzens (24) auf dem Ring (21) unter einem axialen Schweißdruck von vorzugsweise etwa 1,5 bar ausgeführt und anschließend während einer dieser Rotation folgenden Abkühlung ein axialer Haltedruck von vorzugsweise etwa 2 bar ausgeübt wird.

12. Montageverfahren nach Anspruch 11, **dadurch gekennzeichnet, dass** dieses Schweißen bei einer Drehgeschwindigkeit von etwa 4000 Umdrehungen je min. und während ungefähr zehn Sekunden für eine axiale Eindringtiefe des Stutzens (24) in den Ring (21) von vorzugsweise ungefähr 3 mm ausgeführt wird.
